# EUROPEAN PATENT SPECIFICATION

(11) **EP 2 543 257 B1**
(45) Date of publication and mention of the grant of the patent: **27.06.2018**
(21) Application number: 11172831.7
(22) Date of filing: 06.07.2011
(51) Int. Cl.: A23G 1/00, A23G 3/00, A23G 7/00, A23G 1/20, A23G 1/22, A23G 3/02, A23G 7/02

(54) **Method for manufacturing a confectionery product**
Verfahren zur Herstellung eines Süßwarenprodukts
Procédé pour fabriquer un produit de confiserie

(43) Date of publication of application: 09.01.2013
(73) Proprietor: Kraft Foods R & D, Inc., Deerfield, IL 60015 (US)
(72) Inventor: Weers, Michael, 81737 Munich (DE); Gustav, Thorsten, Solihull, B91 3JB (GB); Oezmutlu, Oezlem, 81549 Munich (DE)
(74) Representative: Wilson Gunn

(56) References cited:
- WO-A1-93/21087
- WO-A1-94/04046
- BE-A6- 1 017 445
- DE-A1- 19 830 258
- FR-A- 1 587 835
- FR-A1- 2 539 670
- FR-A1- 2 609 237
- FR-A1- 2 801 570
- GB-A- 645 747
- GB-A- 1 128 525
- GB-A- 1 214 983
- JP-A- 2 092 261
- JP-A- 55 023 911
- JP-A- 56 023 838
- JP-A- 59 120 062
- JP-A- 61 037 077
- JP-A- 2009 136 193
- US-A- 2 796 033
- US-A- 4 104 411
- US-A- 5 789 005

## Description

### Technical field

The present invention relates to a method for manufacturing a confectionery product, more particularly a method in which chocolate is solidified so as to produce a confectionery product.

### Background of the Invention

Confections formed from a liquid mass are usually required to be cooled in order to solidify the mass prior to packaging. For instance, a moulded or enrobed confection having an outer chocolate layer is cooled so that the chocolate solidifies and the confection can be handled and packaged. Cooling of chocolate must be controlled so that the fat in the chocolate crystallises in the correct form (usually Form V). If the temperature is too low, "fat blooming" (formation of large fat crystals on the surface of the confection) may occur and the confection might not be capable of being easily removed from a mould due to sub-optimal crystallisation. Low temperatures may also cause water vapour in the air to condense onto the confection and cause "sugar blooming" due to dissolution and recrystallisation of sugar on the surface of the confection.

A confection is typically cooled by passing it through a tunnel which is divided into zones having different temperatures, the different temperatures being attained using a series of cooling units. Initial cooling is usually mild, particularly if the confection is enrobed with chocolate. The confection is then passed through the zone having the lowest temperature (e.g. about 13°C) before being warmed slightly prior to exiting the cooler to prevent condensation forming on the confection. It is also necessary to carefully control moisture levels inside the cooler to prevent condensation forming on the confection.

The time required to solidify chocolate depends on its composition and quantity. However, it normally takes between 10 and 20 minutes, possibly up to 90 minutes, to obtain a confection having a satisfactory quality using a conventional cooler as described above. As well as this time burden, coolers are expensive in terms of initial investment and maintenance, and coolers occupy a significant amount of floor space. Moreover, it is still necessary to package confections following cooling as well as remove the confections from any mould before packaging.

A further disadvantage of conventional confectionery coolers is that it is difficult to control the cooling process when there is a stoppage in the production line (i.e. movement of the confections through the cooler is halted).

GB-A-2 405 827 discloses a method for producing moulded confections using a cooler along the lines described above. Chocolate shells, fillings and chocolate bases are sequentially solidified by repeatedly passing the mould through a cooling tunnel at a temperature of 10-12°C for at least 10 minutes (at least 15 minutes in the case of the shells) .

WO94/04046 discloses a method for producing a packaged "ice pop" precursor comprising the steps of depositing a heated aqueous liquid into a pouch, sealing the pouch and cooling the liquid, which cooling may be performed using a chilled water bath.

GB1128525, FR2609237, JP56023838 and US4104411 describe various methods for the production of materials including ice lollies, ice cream, moulded fruit, cooked eggs suspended in jelly and iced confections, all of which confections are placed within a primary package; the methods comprising immersing the primary package in a liquid to solidify the confectionery material.

DE19830258 discloses production of a chocolate in which a step of cooling an unsealed chocolate contained in a mould is performed using cold air or nitrogen gas.

FR2539670 discloses the solidification of a chocolate contained in a mould by immersing the mould in a liquid, with the mould being unsealed prior to immersion in the liquid.

FR1587835, US2796033 and GB2279286 disclose methods of solidifying chocolate. FR1587835 and US2796033 disclose solidifying chocolate in a cooling tunnel, whereas GB2270286 does not disclose any particular cooling means.

It is an object of the present invention to provide an improved method for producing a solidified confectionery product.

### Summary of the Invention

A first embodiment of the present invention is a method for producing a confectionery product comprising the steps of:
(i) sealing an unsolidified chocolate inside a primary package which is in direct contact with the unsolidified chocolate; and
(ii) immersing the primary package containing the unsolidified chocolate into a liquid having a temperature below the solidification temperature of the chocolate so as to solidify the chocolate; wherein the primary package is impervious to both the chocolate and the liquid.

This method allows the chocolate to be solidified more rapidly than using a conventional cooler without deterioration in product quality (i.e. without fat- and sugar-blooming) and without the investment, operation and maintenance costs associated with a cooler. Cooling can be easily controlled by adjusting the temperature of the liquid and the immersion period.

The above method is also advantageous in that the chocolate is solidified whilst being sealed within a primary package. This not only avoids the need to apply such packaging after cooling, but also prevents contamination of the chocolate and avoids sugar blooming caused by condensation.

### Brief Description of the Drawings

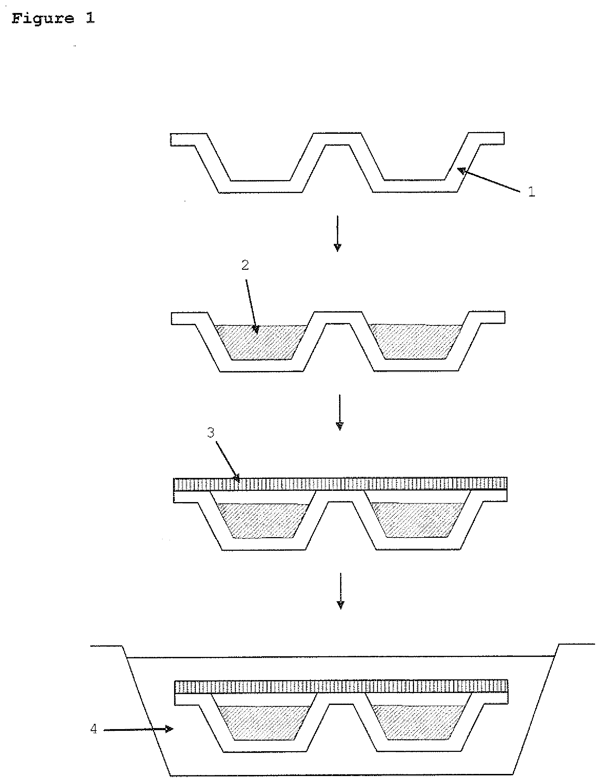

Figures 1-3: Flow diagrams illustrating particular methods according to the present invention.

### Detailed Description of the Invention

The method of the present invention is described in detail below.

The confectionery product is not particularly limited; the confectionery product can, for instance, be a block or tablet (with or without breakable portions), a thin sheet or slice, an individual bite-sized portion or a bar.

The chocolate deposited into the primary package is unsolidified. This means that the chocolate is not fully solidified. The mass can, however, be partially solidified and/or be mixed with solid components (e.g. solid chocolate or nut pieces). Preferably, the chocolate is free-flowing under gravity so that it can be easily shaped in the primary package.

In a particular embodiment, the chocolate comprises, or consists of, tempered chocolate, meaning that the chocolate has undergone controlled heating and cooling so that it contains predominantly Type V fat crystals. Tempering processes are well known. Tempered chocolate provides optimal taste, texture, appearance and "snap".

The primary package within which the unsolidified chocolate is sealed serves to contain and protect the chocolate during immersion in the liquid (hereinafter occasionally referred to as the "cooling liquid"). It is therefore required that the primary package is impervious to the chocolate and the liquid under the conditions of immersion in the liquid, i.e. chocolate should not leak through the primary package and the liquid should not pass through the package. Use of a primary package which is pervious to the liquid under the immersion conditions can lead to contamination of the chocolate. This should be prevented from both a consumer perception and safety point of view.

As well as being impervious to the chocolate and the cooling liquid, the primary package should enable heat conduction to some extent so that the chocolate solidifies whilst immersed in the liquid. This may depend on the thickness of the package and the thickness of the chocolate. The primary package suitably has a thermal conductivity of at least 0.1 W/(m.K).

The primary package may be formed from a polymeric material (i.e. a polymer-containing material) so that the package can be produced without difficulty and the package is impervious to the chocolate and the liquid. In one embodiment, the primary package comprises at least one of polyvinyl chloride (PVC), polyethylene teraphthalate, polypropylene, polyamide, polyethylene and copolymers thereof. In a more specific embodiment, the primary package comprises, or consists essentially of, polypropylene.

In one embodiment, the primary package comprises a mould portion which causes the chocolate to solidify in a predetermined shape. This means that a portion of the primary package has the predetermined shape and does not lose this shape when the package is immersed in the cooling liquid. The package may, for instance, contain a concave portion into which chocolate is deposited. The mould portion can comprise a plurality of cavities which are semi-filled or completely filled by the chocolate. The cavities may be embossed or engraved in order to form a decorative element on the solidified chocolate.

The use of a primary package comprising a mould portion is advantageous in that it avoids the need for de-moulding following solidification of the chocolate, thereby avoiding product breakages which commonly occur during de-moulding.

A method which utilises a primary package having a moulded portion according to the embodiment described above is illustrated in Figure 1. In this method, a mould (1) comprising a plurality of cavities (two are visible in Figure 1, but more cavities may be present) is employed as the principal component of the primary package.

In an alternative embodiment, the primary package may have no predetermined shape. In particular, the package may be formed from a flexible material (e.g. a polymeric material) which takes on the shape of at least part of the unsolidified chocolate. For this, the mass sealed in the primary package can have a viscosity of <6 Pa.s at 40°C and a shear rate of 5 s<-1>. The primary package may comprise a flexible film of material comprising a single layer or a plurality of layers connected together by lamination or the like. The chocolate can be shaped inside the primary package by vibrating the package. Vibration can be used to spread the chocolate out so that it forms a thin layer which is rapidly solidified when immersed in the liquid.

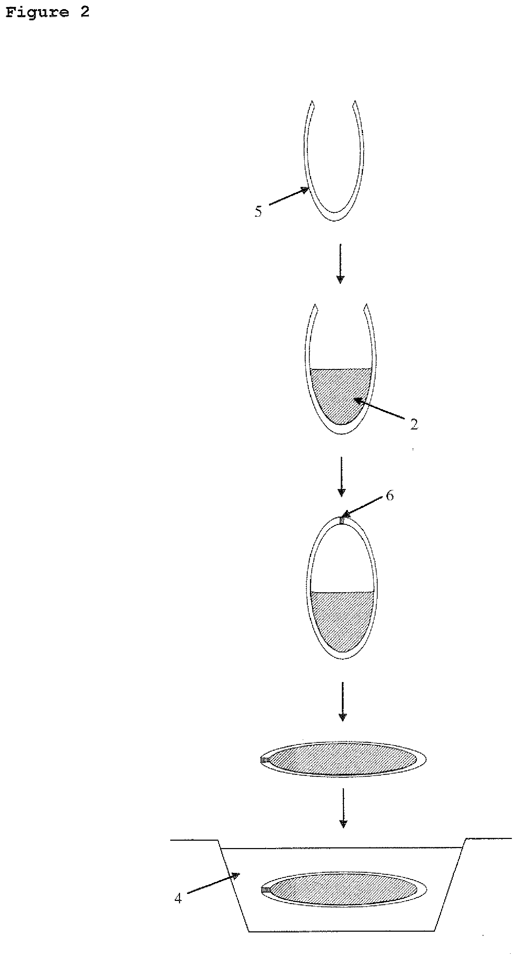

A method in which the primary package has no predetermined shape is illustrated in Figure 2. In this method, a flexible, open package (5) is (partially) filled with an unsolidified chocolate (2). Following sealing, the package is laid horizontally so that the chocolate can spread out and the package takes on the shape of the chocolate. This may be promoted by vibrating the package.

The unsolidified chocolate typically has a temperature of 26-31°C when sealed inside the primary package. Accordingly, the chocolate may have a viscosity of <10 Pa.s at 28°C and 5 s<-1>.

The primary package should not be so thick that it does not conduct heat at a sufficient rate, as is the case for conventional moulds. An overly thick primary package is also undesirable in terms of cost, environmental impact and the weight of the confectionery product as sold when the primary package is retained. With this in mind, the primary package may have a maximum wall thickness of 2.5 mm, 1.5 mm, 0.5 mm, 0.1 mm, 0.05 mm or 0.03 mm. The latter four values are particularly appropriate when the primary package has no predetermined shape so it is sufficiently flexible and allows rapid heat conduction.

The unsolidified chocolate is sealed inside the primary package. In the context of the present invention, "sealed" means that the chocolate is contained within the primary package such that the mass does not leak out of the package and the cooling liquid does not pass into the package during solidification. In one embodiment, the primary package is sealed using ultrasound (i.e. by ultrasonic sealing). This involves applying high-frequency ultrasonic acoustic vibrations to the package in order to seal the open parts of the package without heating it. Heating of the package risks damaging the chocolate.

The primary package may consist of a plurality of parts which are sealed together once the chocolate has been deposited. For instance, in the case that the primary package comprises a mould portion, a second package portion may be laid over the open mould portion once the chocolate has been deposited into the mould portion, and the mould portion and the second portion are then sealed together. The second portion can be a single-or multi-layered film. Particular components of the layer(s) are as described above for the primary package as a whole. The second portion does not, however, have to have the same composition as the mould portion.

Figure 1 illustrates a method employing a primary package having a plurality of parts. An unsolidified chocolate mass (2) is sealed inside a primary package consisting of a mould portion (1) and a single-layered film (3).

In an alternative embodiment, the primary package is flexible and a seal is formed between two ends of the package once the chocolate has been deposited into the package, thereby enclosing the mass inside the package. This is illustrated in Figure 2. In the method depicted in Figure 2, a seal (6) is formed between the open ends of the flexible package (5).

In order to solidify the chocolate, the primary package containing the chocolate is immersed in a liquid having a temperature below the solidification temperature of the chocolate. The liquid is not particularly limited, provided that it can be maintained at a temperature below the solidification temperature of the chocolate and the liquid does not pass through the primary package. For convenience, the liquid can be water.

The primary package containing the unsolidified chocolate is immersed in the liquid to such an extent that the chocolate solidifies. This generally involves submerging the chocolate beneath the surface of the liquid so that the chocolate solidifies rapidly and evenly. It is not, however, necessary for the entire primary package to be submerged.

The temperature of the liquid should be lower than the solidification temperature of the chocolate, i.e. below the temperature at which the chocolate in full liquid form begins to solidify. In order to solidify the chocolate sufficiently quickly without reducing the quality of the solidified chocolate, the liquid can have a temperature of no more than 20°C, 18°C or 1.6°C, and at least 1°C, 2°C, 3°C, 4°C, 5°C or 10°C. More particularly, the temperature of the liquid may be in the range of 5-16°C or 10-15°C. A temperature within these ranges solidifies the chocolate rapidly and produces a stable crystal structure.

The immersion period is dependent on the composition and mass of the chocolate as well as the distribution of the mass in the primary package and the temperature of the cooling liquid. In general, the primary package is immersed in the liquid for no longer than 5 minutes, more particularly no longer than 2 minutes, in order to solidify the chocolate. Such rapid solidification increases the output of the method compared to methods using a conventional cooler. The minimum immersion period necessary for solidification is generally 30 seconds, 45 seconds or 1 minute. These values can be freely combined with the aforementioned maximum durations.

It is not necessary that the chocolate is completely solidified when it is immersed in the cooling liquid. However, substantial solidification is advantageous in terms of avoiding the need to further cool the mass after immersion. In one embodiment, the chocolate is completely solidified during immersion in the cooling liquid.

The chocolate can be retained in the primary package after solidification so that the solidified mass remains protected and is ready for shipping as it is or for further packaging (secondary packaging). In one embodiment, a secondary package is formed around the solidified chocolate sealed inside the primary package. Examples of the secondary package include paper and cardboard boxes and sleeves, and foil wrappers.

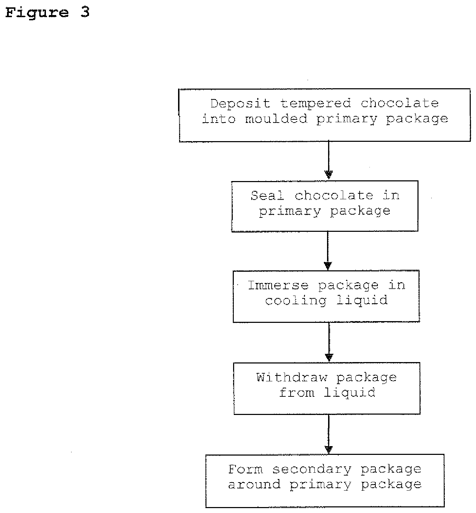

Figure 3 illustrates a particular method according to the present invention. In this method, unsolidified tempered chocolate is first deposited into a primary package comprising a mould portion. The package is sealed (e.g. by ultrasonically 'welding' a polymer film over the mould portion) and subsequently immersed in a liquid having a temperature below the solidification temperature of the chocolate (e.g. 5-16°C). Once the chocolate is substantially or fully solidified, the package is removed from the liquid and a secondary package is formed around the primary package so that the product is ready to be shipped.

### Examples

The present invention is illustrated by the following Examples.

### Example 1

25 g of unsolidified tempered Milka<®> milk chocolate (manufactured by Kraft Foods) at a temperature of 26.7-27.3°C was deposited into three flexible pouches in turn. The pouches were formed from polypropylene, had a thickness of 27 µm and measured 100 × 90 mm. The pouches were heat sealed at 150°C using a Freya sealing machine and placed on a vibration table (vertical frequency = 100 Hz, horizontal frequency = 100 Hz, amplitude - 3 mm) for 30 seconds to distribute the chocolate evenly inside the pouches. The thickness of the chocolate layers in the pouches following vibration was between 2 mm and 4 mm.

The pouches containing the unsolidified chocolate were fully immersed in a water bath. The water had a temperatures of 5°C and was gently circulated.

The temperature of the chocolate in each of the pouches was monitored using a Testo 735 temperature probe until the temperature of the solidified chocolate reached the temperature of the water or the cooling rate reached zero. It was found that the chocolate took 32 seconds to reach a temperature of 20°C and an average of 4.2 minutes to reach 5°C. The maximum cooling rate was 28°C/minute.

### Examples 2-5

Chocolate was solidified in the manner described in Example 1, except that the temperature of the water bath was altered, as shown in Table 1 below.

**Table 1**

| **Example** | **Water temp. (°C)** | **Average initial temp. (°C)** | **Average time to reach 20°C (s)** | **Average time to reach water temp. (min)** | **Average maximum cooling rate (°C/min)** |
|---|---|---|---|---|---|
| 1 | 5 | 27.5 | 32 | 4.2 | 28 |
| 2 | 8 | 27.8 | 32 | 3.5 | 21 |
| 3 | 10 | 27.4 | 34 | 2.3 | 22 |
| 4 | 12 | 27.5 | 36 | 2.3 | 22 |
| 5 | 14 | 27.6 | 35 | 1.8 | 20 |

The solidified chocolate was stored inside the sealed pouches for 3 months at 16°C. None of the samples displayed a change in appearance over this period (i.e. no fat- or sugar-blooming occurred), despite the low temperatures of the cooling liquids.

The crystallisation properties of the chocolate of Examples 1 and 5 were compared by subjecting the chocolate to differential scanning calorimetry (DSC). This revealed no significant difference between the chocolate as regards melting temperature. However, the average enthalpy of melting of the chocolate solidified in a water bath at 5°C was lower than that solidified at 14°C: 32.05 J/g versus 33.99 J/g. This indicates that the lower cooling rate provided a more stable crystalline structure.

### Example 6

25 g of unsolidified tempered Milka<®> milk chocolate (manufactured by Kraft Foods) at a temperature of 27.5 °C was deposited into an open tablet-form PVC mould measuring 40 × 25 × 10 mm and having a wall thickness of 2.5 mm. The mould contained 24 sub-cavities arranged in 3 rows and 8 columns at its base. The depth of the mould was 10 mm.

The mould was vibrated (vertical frequency = 100 Hz, horizontal frequency = 100 Hz, amplitude = 3 mm) for 30 seconds to smooth the surface of the chocolate. Subsequently, the open top of the mould was heat sealed at 150°C using a cast polypropylene film having a thickness of 27 µm.

The sealed mould containing the unsolidified chocolate was submerged in a water bath having a temperature of 5 °C for 116 seconds in order to solidify the chocolate.

The chocolate was stored for 3 weeks inside the sealed mould. It was found that the appearance of the chocolate was unchanged over this period, i.e. no fat- or sugar-blooming occurred.

## Claims

1. A method for producing a confectionery product comprising the steps of:
(i) sealing unsolidified chocolate (2) inside a primary package which is in direct contact with the unsolidified chocolate; and
(ii) immersing the primary package containing the unsolidified chocolate into a liquid (4) having a temperature below the solidification temperature of the chocolate so as to solidify the chocolate;
wherein the primary package is impervious to both the chocolate and the liquid.

2. A method according to Claim 1, wherein the unsolidified chocolate is tempered.

3. A method according to Claim 1 or Claim 2, wherein the primary package comprises a polymer.

4. A method according to Claim 3, wherein the primary package comprises at least one of polyvinyl chloride, polyethylene teraphthalate and polypropylene.

5. A method according any preceding claim, wherein the primary package is sealed in step (i) by ultrasonic sealing or heat sealing.

6. A method according to any preceding claim, wherein the primary package comprises a mould portion (1) which causes unsolidified chocolate (2) contained therein to solidify in a predetermined shape in step (ii).

7. A method according to Claim 6, wherein the mould portion (1) comprises a plurality of cavities which contain the chocolate in steps (i) and (ii).

8. A method according to any of Claims 1-5, wherein the primary package (5) has no predetermined shape and is capable of conforming to the shape of at least part of the unsolidified chocolate (2).

9. A method according to Claim 8, wherein the unsolifified chocolate (2) sealed inside the primary package (5) is vibrated so as to shape the chocolate.

10. A method according to any preceding claim, wherein the unsolidified chocolate (2) sealed in the primary package is formed into a predetermined shape and immersed in the liquid (4) in the predetermined shape.

11. A method according to any preceding claim, wherein the primary package has a maximum wall thickness of 0.5 mm.

12. A method according to any preceding claim, wherein the temperature of the liquid (4) in step (ii) is 5-16°C.

13. A method according to Claim 12, wherein the temperature of the liquid (4) is 10-15°C.

14. A method according to any preceding claim, wherein the primary package containing the unsolidified chocolate (2) is immersed in the liquid (4) for no more than 2 minutes in step (ii) .

15. A method according to any preceding claim, comprising the additional step of forming a secondary package around the primary package containing the solidified chocolate.

## Patentansprüche

1. Verfahren zum Herstellen eines Süßwarenprodukts, das die folgenden Schritte umfasst:
(i) Versiegeln nicht verfestigter Schokolade (2) innerhalb einer primären Verpackung, die in direktem Kontakt mit der nicht verfestigten Schokolade steht; und
(ii) Eintauchen der primären Verpackung, welche die nicht verfestigte Schokolade enthält, in eine Flüssigkeit (4) mit einer Temperatur unterhalb der Verfestigungstemperatur der Schokolade, um die Schokolade zu verfestigen;
wobei die primäre Verpackung sowohl gegenüber der Schokolade als auch der Flüssigkeit undurchlässig ist.

2. Verfahren nach Anspruch 1, wobei die nicht verfestigte Schokolade temperiert ist.

3. Verfahren nach Anspruch 1 oder Anspruch 2, wobei die primäre Verpackung ein Polymer umfasst.

4. Verfahren nach Anspruch 3, wobei die primäre Verpackung mindestens eines von Polyvinylchlorid, Polyethylenteraphthalat und Polypropylen umfasst.

5. Verfahren nach einem der vorstehenden Ansprüche, wobei die primäre Verpackung in Schritt (i) durch Ultraschallversiegelung oder Hitzeversiegelung versiegelt wird.

6. Verfahren nach einem der vorstehenden Ansprüche, wobei die primäre Verpackung einen Formabschnitt (1) umfasst, der dazu führt, dass sich die nicht verfestigte Schokolade (2) darin in einer vorher festgelegten Form in Schritt (ii) verfestigt.

7. Verfahren nach Anspruch 6, wobei der Formabschnitt (1) eine Vielzahl von Hohlräumen umfasst, welche die Schokolade in den Schritten (i) und (ii) enthält.

8. Verfahren nach einem der Ansprüche 1-5, wobei die primäre Verpackung (5) keine vorher festgelegten Form aufweist und sich der Form von zumindest einem Teil der nicht verfestigten Schokolade (2) anpassen kann.

9. Verfahren nach Anspruch 8, wobei die nicht verfestigte Schokolade (2), die innerhalb der primären Verpackung (5) versiegelt ist, vibriert wird, um die Schokolade zu formen.

10. Verfahren nach einem der vorstehenden Ansprüche, wobei die nicht verfestigte Schokolade (2), die innerhalb der primären Verpackung versiegelt ist, in eine vorher festgelegte Form geformt und in die Flüssigkeit (4) in der vorher festgelegten Form getaucht wird.

11. Verfahren nach einem der vorstehenden Ansprüche, wobei die primäre Verpackung eine maximale Wanddicke von 0,5 mm aufweist.

12. Verfahren nach einem der vorstehenden Ansprüche, wobei die Temperatur der Flüssigkeit (4) in Schritt (ii) 5-16 °C beträgt.

13. Verfahren nach Anspruch 12, wobei die Temperatur der Flüssigkeit (4) 10-15 °C beträgt.

14. Verfahren nach einem der vorstehenden Ansprüche, wobei die primäre Verpackung, welche die nicht verfestigte Schokolade (2) enthält, nicht länger als 2 Minuten in Schritt (ii) in die Flüssigkeit (4) getaucht wird.

15. Verfahren nach einem der vorstehenden Ansprüche, das den zusätzlichen Schritt des Bildens einer sekundären Verpackung um die primäre Verpackung herum, welche die verfestigte Schokolade enthält, umfasst.

## Revendications

1. Procédé de production d'un produit de confiserie comprenant les étapes consistant à :
(i) sceller du chocolat non solidifié (2) à l'intérieur d'un emballage primaire qui est en contact direct avec le chocolat non solidifié ; et
(ii) immerger l'emballage primaire contenant le chocolat non solidifié dans un liquide (4) ayant une température en dessous de la température de solidification du chocolat de façon à solidifier le chocolat ;
dans lequel l'emballage primaire est imperméable à la fois au chocolat et au liquide.

2. Procédé selon la revendication 1, dans lequel le chocolat non solidifié est soumis à un tempérage.

3. Procédé selon la revendication 1 ou la revendication 2, dans lequel l'emballage primaire comprend un polymère.

4. Procédé selon la revendication 3, dans lequel l'emballage primaire comprend au moins l'un parmi du poly(chlorure de vinyle), du polyéthylène téréphtalate et du polypropylène.

5. Procédé selon l'une quelconque revendication précédente, dans lequel l'emballage primaire est scellé à l'étape (i) par scellage par ultrasons ou thermoscellage.

6. Procédé selon l'une quelconque des revendications précédentes, dans lequel l'emballage primaire comprend une partie de moule (1) qui amène le chocolat non solidifié (2) contenu en son sein à se solidifier dans une forme prédéterminée à l'étape (ii).

7. Procédé selon la revendication 6, dans lequel la partie de moule (1) comprend une pluralité de cavités qui contiennent le chocolat aux étapes (i) et (ii).

8. Procédé selon l'une quelconque des revendications 1 à 5, dans lequel l'emballage primaire (5) n'a aucune forme prédéterminée et est susceptible de prendre la forme d'au moins une partie du chocolat non solidifié (2).

9. Procédé selon la revendication 8, dans lequel le chocolat non solidifié (2) scellé à l'intérieur de l'emballage primaire (5) est mis en vibration de façon à mettre en forme le chocolat.

10. Procédé selon l'une quelconque des revendications précédentes, dans lequel le chocolat non solidifié (2) scellé dans l'emballage primaire est formé en une forme prédéterminée et immergé dans le liquide (4) dans la forme prédéterminée.

11. Procédé selon l'une quelconque des revendications précédentes, dans lequel l'emballage primaire a une épaisseur maximale de paroi de 0,5 mm.

12. Procédé selon l'une quelconque des revendications précédentes, dans lequel la température du liquide (4) à l'étape (ii) va de 5 à 16 °C.

13. Procédé selon la revendication 12, dans lequel la température du liquide (4) va de 10 à 15 °C.

14. Procédé selon l'une quelconque des revendications précédentes, dans lequel l'emballage primaire contenant le chocolat non solidifié (2) est immergé dans le liquide (4) pendant pas plus de 2 minutes à l'étape (ii).

15. Procédé selon l'une quelconque des revendications précédentes, comprenant l'étape supplémentaire consistant à former un emballage secondaire autour de l'emballage primaire contenant le chocolat solidifié.
